# EUROPEAN PATENT APPLICATION

(11) **EP 4 166 726 A1**
(43) Date of publication of application: **19.04.2023**
(21) Application number: 22202162.8
(22) Date of filing: 18.10.2022
(51) Int. Cl.: E02F 9/20, G05B 11/38, E02F 3/43, B60L 50/00

(54) **METHOD AND SYSTEM FOR CONTROLLING AN ELECTRIC TRANSMISSION OF A WHEEL LOADER**

(30) Priority: 18.10.2021 IT 202100026672
(71) Applicant: CNH Industrial Italia S.p.A., 10156 Torino (IT)
(72) Inventor: Garramone, Adriano, 73100 Lecce (IT); Gravili, Andrea, 73100 Lecce (IT); Liberti, Stefano, 73100 Lecce (IT); Venezia, Antonio, 10153 Torino (IT)
(74) Representative: CNH Industrial IP Department

(57) **Abstract**

Method of controlling an electric transmission of a mechanical shovel (CWL) equipped with an arm (B) and a shovel or bucket (T), the transmission comprising an electric motor (M) of propulsion, the method comprising, acquiring a value of a deflection (a) of an accelerator pedal (AP) and a control process of the electric motor (M) so as to achieve a speed control in closed loop, wherein the target speed value is a function of said value deflection according to a predetermined proportionality ratio, and when a digging operation is recognized, said predetermined proportionality ratio is reduced to a settable value.

## Description

### Field of the invention

The present invention relates to the field of electrified work vehicles, and in particular of the type comprising an electric motor connected to at least one vehicle wheel to allow the vehicle to move forward or backward.

### State of the art

The progressive technological development of battery power systems makes it possible to design electric work vehicles. The dynamic behavior of an electric vehicle is completely different from the behavior of a vehicle with a thermal engine equipped with a hydraulic transmission.

When propulsion is achieved by means of a thermal engine, the position of the accelerator pedal identifies a corresponding number of revolutions of the thermal engine and when the value of the resisting torque exceeds the maximum value of the engine torque, the latter is increased by the hydraulic transmission, through the increase of displacement of the hydraulic motor and/or reduction of displacement of the hydraulic pump.

However, the hydraulic transmission is designed so that maximum torque never exceeds a vehicle's wheel slip limit value.

A vehicle with an electric motor, on the other hand, is characterized by the fact that a speed control strategy is implemented, which implies that the position of the accelerator pedal identifies a corresponding vehicle speed value and therefore it is possible to have a drive torque greater than the vehicle's wheel slip limit value.

This causes inconvenience to driving especially during the "digging" phase in which the shovel is inserted into a pile of material to be picked up.

The Anglo-Saxon term "digging" identifies this loading phase and does not have a corresponding term in Italian language. In particular, with a speed-controlled electric transmission, the vehicle's wheels could begin to slip while the shovel penetrates the heap of material to be collected due to the high torque delivered by the electric propulsion motor and managed by the closed-loop control.

The speed control of the electric propulsion motor in closed cycle is a function of a deflection value of the accelerator pedal. The controlled variable is the torque delivered by the electric motor in order to track a vehicle speed value corresponding to the accelerator pedal deflection value. This situation causes discomfort for the operator who is forced to dose the accelerator pedal in order not to lose propulsion while the shovel penetrates the heap of material to be picked up and also to avoid excessive deterioration of the tires.

If not specifically excluded in the detailed description that follows, what is described in this chapter is to be considered as an integral part of the detailed description.

### Summary of the invention

The object of the present invention is to propose a method and system for controlling an electric transmission of a mechanical shovel.

The basic idea of the present invention is to automatically reduce the target speed of the vehicle in digging conditions.

Preferably, the proportionality ratio between the deflection value of the accelerator pedal and the target speed of the vehicle is reduced.

Advantageously, the vehicle is much more manageable during the operations for inserting the bucket into a heap of material, preventing the vehicle wheels from slipping.

The digging phase is recognized upon the simultaneous occurrence of a list of conditions listed below:
- The vehicle speed is below a first predetermined threshold,
- The variation in vehicle speed is below a predetermined threshold,
- The transmission is in forward gear,
- The hydraulic functions are active,
- The engine torque delivered by the propulsion motor exceeds a predetermined torque threshold,
- The variation of the engine torque exceeds a predetermined variation threshold,
- An accelerator pedal deflection value exceeds a predetermined deflection threshold,
- The position of the arm is below a predetermined height,
- The position of the shovel or bucket is within a predetermined range of angles with respect to the arm.
When at least one of the following conditions is verified, the system restores the target speed value depending on the deflection value of the accelerator pedal and in particular the normal proportionality ratio:
- Changeover of the transmission from forward to neutral or reverse;
- The vehicle speed exceeds a second predetermined threshold greater than the first.

Preferably, the reduction of the proportionality ratio can be set through a human-machine interface, for example a touch screen.

According to a preferred variant of the invention, the reduction and restoration of the proportionality ratio is operated gradually in order to avoid an abrupt decrease or increase in vehicle performance.

The dependent claims describe preferred variants of the invention, forming an integral part of this description.

### Brief description of the figures

Further objects and advantages of the present invention will become clear from the following detailed description of an example of its embodiment (and its variants) and from the annexed drawings given purely for explanatory and non-limiting purposes, in which:
Figure 1 shows an example of a wheel loader implementing the present invention;
Figure 2 shows an electric transmission implementing the present invention;
Figure 3 shows a time diagram of the vehicle speed, as a function of the deflection value of the accelerator pedal, modified according to the present invention.

The same reference numbers and letters in the figures identify the same elements or components or functions.

It should also be noted that the terms "first", "second", "third", "upper", "lower" and the like can be used as labels to distinguish various elements. These terms do not imply a spatial, sequential or hierarchical order for the modified elements unless specifically indicated or inferred from the text.

The elements and features illustrated in the various preferred embodiments, including the drawings, can be combined with each other without however departing from the scope of this application as described below.

### Detailed description of exemplary embodiments

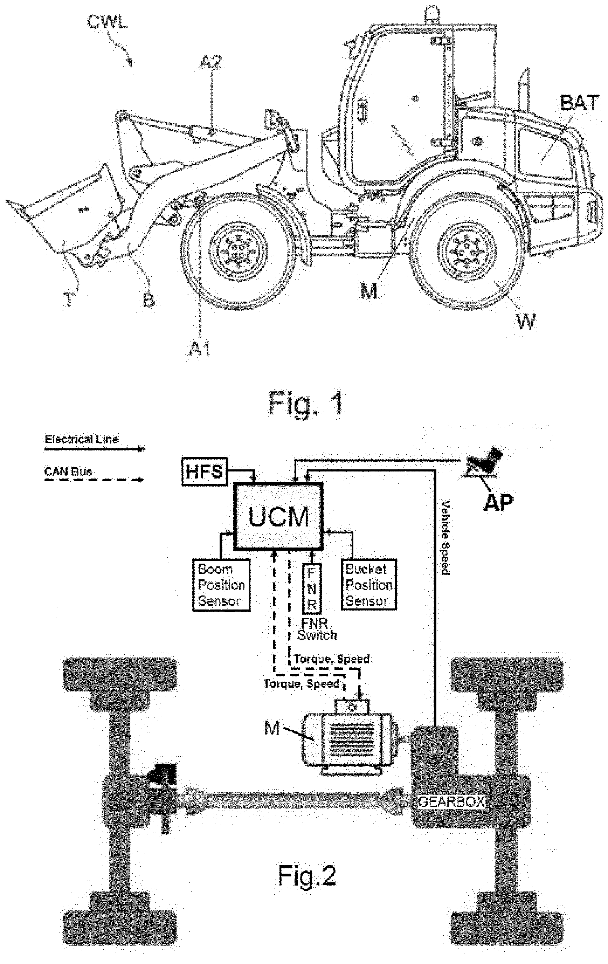

Figure 1 shows a work vehicle CWL, a wheel loader, with an arm B operated by the hydraulic actuator A1 and a shovel T, connected to the arm B and operated by the relative actuator A2.

The operation of the hydraulic actuators is subject to the activation of the "hydraulic functions". Without this activation, the hydraulic circuit that supplies the actuators A1 and A2 remains deactivated.

The vehicle CWL is equipped with a battery pack BAT and an electric motor M connected to the transmission and to at least one vehicle wheel W.

A processing unit UCM, schematized in Figure 2, is operationally connected with a plurality of sensors, including
- An accelerator pedal deflection sensor, which, for convenience, is indicated with the same accelerator pedal AP,
- A vehicle speed sensor, generally associated with the vehicular transmission,
- An arm position sensor "Boom Position Sensor", generally associated with actuator A1 arranged to move the arm B,
- An angular position sensor "Bucket Position Sensor" of the shovel T, generally associated with the actuator A2 arranged to move the shovel,
- A sensor associated with the forward, neutral or reverse gear selector lever "FNR Switch",
- A torque sensor delivered by the propulsion electric motor M,
- A sensor for enabling the hydraulic functions "Hydraulic Function Switch" synthesized with the acronym HFS.

Since the arm and/or the bucket and possibly also further auxiliary members can be activated by means of an electro-hydraulic circuit, then, according to the present invention, a button or in any case a man-machine interface allows the electrical circuit to be enabled or disabled. The HFS sensor allows to detect if the hydraulic functions, enslaved to the arm and/or bucket are active or inactive.

The torque sensor can be replaced by a model of the electric motor, which on the basis of supply voltages and currents is able to estimate the torque delivered by the electric motor. The UCM processing unit is configured to control the electric motor M based on the signals generated by the aforementioned sensors.

The UCM processing unit is configured to control the electric motor M based on the signals generated by the aforementioned sensors.

In particular, the processing unit is configured to perform a speed control on the electric motor.

When the unit performs a speed check, a deflection of the accelerator pedal corresponds to a vehicle speed. The deflection angle and vehicle speed are proportional. So that, for example, at 10% of the deflection, with respect to a released condition, of the accelerator, the vehicle speed is 10% of the rated speed. Proportionality can be linear or it can be exponential. An exponential proportionality is advantageous for having greater control of the vehicle at low speed.

A feedback control ensures that the vehicle reaches a speed corresponding to the position of the pedal, regardless of the resistance torque value that opposes the advancement of the vehicle. Thus, when climbing or descending, the vehicle advances at the same speed indicated by the deflection of the accelerator pedal.

According to the present invention, the proportionality factor between vehicle speeds and the accelerator pedal deflection value is reduced when the following conditions occur simultaneously:
- a vehicle speed Vehicle Speed is below a first predetermined threshold Sth1,
- a variation of the vehicle speed DVS is below a predetermined threshold DVSth of variation of the vehicle speed,
- The transmission is in forward gear F = ON,
- The hydraulic functions are active HFS = ON,
- an engine torque value TK delivered by the electric motor exceeds a predetermined engine torque threshold Tth,
- a variation of the driving torque DT exceeding a predetermined threshold of variation of the driving torque DTth,
- a deflection value α of the accelerator pedal AP exceeds a predetermined deflection threshold αth,
- a position h of the arm B is below a predetermined height hth,
- a position β of the shovel or bucket T is within a predetermined range of angulation positions βr with respect to the arm.

Reducing the proportionality factor, according to the present invention, means that the new proportionality value is lower than the previous one, but in any case always greater than zero.

The conditions to be respected to cause the aforementioned reduction are therefore:
- Vehicle Speed < Sth1
- DVS < DVSth
- F = ON
- HFS = ON
- TK > Tth
- DT > DTth
- α > αth
- h < hth
- β is within the interval βr

Conversely, the restoration of the proportionality factor is performed when it is recognized that the digging procedure is ended, in particular, when at least one of the following conditions is met:
- F = OFF
- Vehicle Speed> Sth2, with Sth1 <Sth2.

According to a preferred variant of the invention, the reduction and restoration of the proportionality factor are carried out gradually over time.

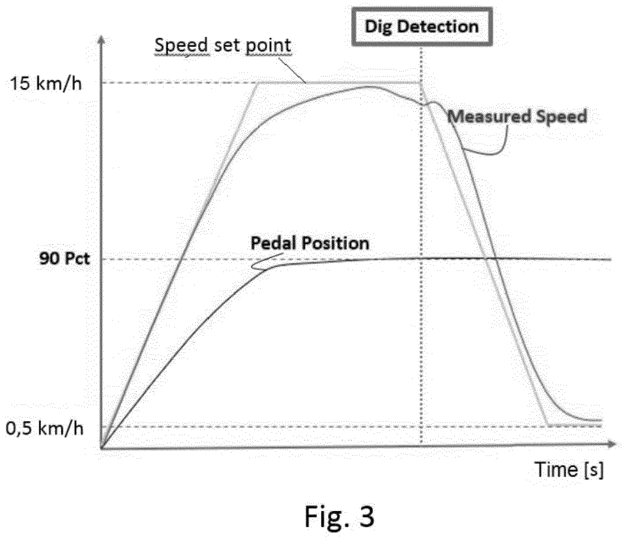

Figure 3 shows an example of reducing the proportionality factor between the deflection value of the accelerator pedal "Pedal position" and the target speed "Speed set Point". Starting from instant zero, the acceleration pedal deflection value increases to a predetermined value indicated with "90 Pct" and subsequently remains constant.

It is noted that the target speed curve increases proportionally up to 15 km/h and then stabilizes at a constant value, with trends very similar to those of the accelerator pedal deflection value.

The actual speed of the vehicle is indicated with the "Measured Speed" curve. Although it is more smoothed, it follows the trend of the target speed curve until the "Dig Detection" event is recognized in which the digging phase is detected.

Well, according to the present invention, as a consequence of this recognition, the proportionality factor between the deflection value of the accelerator pedal and the target speed is drastically reduced. In the example, the value of the reduction ratio is (14.5 / 15) * 100% = 96% approximately.

Evidently, reduction values more suited to the circumstances can be identified.

In this regard, the operator can set the value of the reduction ratio that allows him to avoid wheel slip without compromising the productivity of the vehicle.

According to a preferred variant of the invention, the reduction maintains a proportionality ratio with the deflection value of the accelerator pedal.

The present invention can be advantageously carried out by means of a computer program which comprises coding means for carrying out one or more steps of the method, when this program is executed on a computer. Therefore, it is intended that the scope of protection extends to said computer program and further to computer readable means comprising a recorded message, said computer readable means comprising program coding means for carrying out one or more steps of the method, when said program is run on a computer. Implementation variants of the described non-limiting example are possible, without however departing from the scope of protection of the present invention, including all the equivalent embodiments for a person skilled in the art, to the content of the claims.

From the above description, the person skilled in the art is able to realize the object of the invention without introducing further construction details.

## Claims

1. Method of controlling an electric drive of a wheel loader (CWL) equipped with an arm (B) and a shovel or bucket (T), the transmission comprising an electric propulsion motor (M), the method comprising,
- acquisition of a value of a deflection (α) of an accelerator pedal (AP) ed
- a control process of the electric motor (M) so as to carry out a speed control in closed cycle, wherein a target speed value is a function of said deflection value according to a predetermined proportionality ratio, and
- settable reduction of said predetermined proportionality ratio as long as a digging operation is recognized.

2. Method according to claim 1, wherein said recognition of the digging operation iscaused by the simultaneous detection of all the following conditions:
- a vehicle speed (Vehicle Speed) is below a first predetermined threshold (Sth1),
- a change in vehicle speed (DVS) is below a predetermined threshold (DVSth) for a change in vehicle speed,
- The transmission is in forward gear (F = ON),
- The hydraulic functions are active (HFS = ON),
- an engine torque value (TK) delivered by the electric motor exceeds a predetermined engine torque threshold (Tth),
- a variation of the driving torque (DT) delivered by the electric motor exceeds a predetermined threshold of variation of the driving torque (DTth),
- a deflection value (α) of the accelerator pedal (AP) exceeds a predetermined deflection threshold (αth),
- a position (h) of the arm (B) is below a predetermined height (hth),
- a position (β) of the shovel or bucket (T) is within a predetermined range of angles (βr) with respect to the arm.

3. Method according to claim 1 or 2, wherein said predetermined proportionality ratio is restored when at least one of the following conditions is verified:
- Transmission is in neutral or reverse (F = OFF)
- A vehicle speed value (Vehicle Speed) exceeds a second speed threshold (Sth2) greater than said first speed threshold (Sth1).

4. Method according to any one of the preceding claims 1 - 3, wherein a reduction or restoration of said proportionality ratio is achieved gradually.

5. Computer program comprising program coding means adapted to carry out all the steps of any one of claims 1 to 4, when said program is run on a computer.

6. Computer readable means comprising a recorded program, said computer readable means comprising program coding means adapted to perform all steps of any one of claims 1 to 4, when said program is run on a computer.

7. Electrified mechanical shovel (CWL), equipped with
- an arm (B) and a shovel or bucket (T),
- of a transmission comprising an electric propulsion motor (M), and of
- a control unit (UCM) configured to acquire a value of a deflection (α) of an accelerator pedal (AP) and to perform a control process of the electric motor (M) in order to achieve a speed control in closed loop, wherein a target speed value is a function of said deflection value according to a predetermined proportionality ratio, and configured to reduce said predetermined proportionality ratio as long as it recognize a digging operation.

8. Vehicle according to claim 7, further comprising
- A deflection sensor (AP) of the accelerator pedal,
- A vehicle speed sensor,
- A boom position sensor "Boom Position Sensor",
- A "Bucket Position Sensor" angular position sensor of the shovel (T) with respect to the arm (B),
- A sensor associated with the forward, neutral or reverse gear selector lever "FNR Switch",
- A torque sensor delivered by the electric motor (M),
- A sensor enabling the "HFS" hydraulic functions,
and wherein said sensors are operationally connected with said processing unit (UCM) and wherein the processing unit is configured to recognize said digging operation when
- a vehicle speed (Vehicle Speed) is below a first predetermined threshold (Sth1),
- a change in vehicle speed (DVS) is below a predetermined threshold (DVSth) for a change in vehicle speed,
- The transmission is in forward gear (F = ON),
- hydraulic functions are active (HFS = ON),
- an engine torque value (TK) delivered by the electric motor exceeds a predetermined engine torque threshold (Tth),
- a variation of the engine torque (DT) exceeding a predetermined threshold of variation of the engine torque (DTth),
- a deflection value (α) of the accelerator pedal (AP) exceeds a predetermined deflection threshold (αth),
- a position (h) of the arm (B) is below a predetermined height (hth),
- a position (β) of the shovel or bucket (T) is within a predetermined range of angles (βr) with respect to the arm.

9. Vehicle according to claim 7 or 8, wherein said control unit (UCM) is configured to restore said predetermined proportionality ratio when at least one of the following conditions is verified:
- Transmission is in neutral or reverse (F = OFF)
- A vehicle speed value (Vehicle Speed) exceeds a second speed threshold (Sth2) greater than said first speed threshold (Sth1).

10. Vehicle according to any one of claims 7 - 9, wherein said processing unit is configured to operate said reduction or restoration of said proportionality ratio gradually.
